# EUROPEAN PATENT SPECIFICATION

(11) **EP 1 362 080 B1**
(45) Date of publication and mention of the grant of the patent: **28.09.2005**
(21) Application number: 00989013.8
(22) Date of filing: 22.12.2000
(51) Int. Cl.: C08L 23/16, C08K 3/00, C08L 23/10

(54) **POLYOLEFIN RESIN COMPOSITION**
POLYOLEFINHARZZUSAMMENSETZUNG
PREPARATION DE RESINE POLYOLEFINIQUE

(43) Date of publication of application: 19.11.2003
(73) Proprietor: Samsung General Chemicals Co., Ltd., Chungnam Province 356-870 (KR)
(72) Inventor: KIM, Sok-Won, Seo-ku, Taejon 302-734 (KR); KIM, Young-Won, Yuseong-ku, Taejon 305-728 (KR)
(74) Representative: Hallybone, Huw George
(86) International application number: PCT/KR2000/001525
(87) International publication number: WO 2002/051934

(56) References cited:
- JP-A- 2 240 145
- JP-A- 9 165 478
- JP-A- 2000 191 845
- PATENT ABSTRACTS OF JAPAN vol. 0130, no. 67 (M-798), 15 February 1989 (1989-02-15) & JP 63 270143 A (SHIN KOBE ELECTRIC MACH CO LTD), 8 November 1988 (1988-11-08)
- PATENT ABSTRACTS OF JAPAN vol. 0040, no. 81 (C-014), 11 June 1980 (1980-06-11) & JP 55 045715 A (MITSUBISHI PETROCHEM CO LTD), 31 March 1980 (1980-03-31)

## Description

### Technical Field

The present invention relates to a polyolefin resin composition. More particularly, the invention relates to a polyolefin resin composition which is a composite resin composition with excellent scratch resistance and moldability for use in materials of electronic appliance housing and automobile parts.

### Backaround Art

General polypropylene resins have low specific gravity and good moldability and can easily be recycled. The polypropylene resins also exhibit excellent resistance to heat, solvent and chemicals. Polypropylene resins, however, are defective in scratch resistance and surface hardness. Especially, the polypropylene resins added with inorganic fillers in order to improve flexural rigidity and heat resistance are widely used in housing of home electronic products and in interior parts of automobiles. But, as content of talc is increased in the resin, flexural rigidity and heat resistance are improved while scratch resistance is lowered and, in case of complicated article, the molded article is not properly formed in injection molding. So far, much study has been made to solve these problems.

As a typical example, Korean Patent No. 117,571 discloses a polypropylene resin having improved binding force between polypropylene matrix, rubber component and inorganic filler, by using inorganic filler treated with amino silane coupling agent and ethylene-alpha-olefin copolymerized rubber modified by ester of alpha,beta-unsaturated acid having epoxide functional group, and Korean Patent No. 52,816 discloses a polypropylene resin having improved binding force between polypropylene matrix and rubber component, thus improving scratch resistance and impact strength, by using ethylene-alpha-olefin copolymerized rubber modified by ester of alpha,beta-unsaturated acid having epoxide functional group and polyolefin modified by unsaturated carbon acid or its derivative. Also, Japanese laid open publication Sho-53-118,055 discloses a polypropylene resin having improved scratch resistance by using glass fiber or mica of flake type and Japanese laid open publication Sho-56-88,447 discloses a polypropylene resin having improved scratch resistance by confining ethylene content of polypropylene resin used as a matrix to some range.

But even with the above-mentioned methods, the improvement of scratch resistance is insufficient. Moreover, in the case of Korean Patent No. 117,571 and 52,816, which uses ethylene-alpha-olefin copolymerized rubber modified by ester of alpha,beta-unsaturated acid having epoxide functional group, flexural rigidity and fluidity of resin decrease as rubber components are added. Also, in the case of Japanese laid open publication Sho-53-118,055, which uses glass fiber or mica of flake type, fluidity of resin decreases and appearance becomes bad, and in the case of Sho-56-88,447, which confines ethylene content of polypropylene resin, impact strength is lowered as the content of ethylene which absorbs impact decreases, and moldability also decreases.

Japanese laid open publication Sho-63-270,143 discloses a use of calcium carbonate or talc as a filler for polyolefin resin composition and Japanese laid open publication Hei-2-240,145 discloses a production method of polyolefin resin foam in which a polyorganosiloxane-grafted copolymer is used.

### Disclosure of the Invention

The object of the present invention is to overcome defects of prior art and provide a polyolefin resin composition with improved impact strength, moldability, fluidity, appearance and scratch resistance.
The polyolefin resin composition of the present invention comprises 100 parts by weight of polypropylene, 5 to 45 parts by weight of inorganic filler, and 2 to 20 parts by weight of silicon-grafted metamotphic polyethylene. The polyolefin resin composition of the present invention is novel resin composition which exhibits better scratch resistance, resin fluidity and moldability than prior art polyolefin resin composition while not deteriorating mechanical characteristics.

The present invention will now be described in detail.
The example of polypropylene that can be used in the resin composition of the present invention is homopolymer, block copolymer, random copolymer or terpolymer, or mixture of these. The type of polypropylene may be changed according to the required characteristics of the product. In products requiring impact resistance, for example, block copolymer is used and when flexural modulus is more important than impact resistance, homopolymer is used.
The example of inorganic filler that is used in the resin composition of the present invention in order to reinforce physical properties of polypropylene resin is one or more of materials selected from the group consisting of talc, calcium carbonate, glass fiber, mica and silica. In particular, talc and calcium carbonate are preferable since they are effective in improving heat resistance, flexural modulus of elasticity and scale stability as well as cost effective considering efficacy. In the present invention, talc of average size of 5 ~ 10 micro meters and preferable content is 5 ~ 45 parts by weight. When talc content is below 5 parts by weight, scratch resistance is not substantially improved, and when talc content is over 45 parts by weight, the problem of bad appearance occurs.
The silicon-grafted metamorphic polyethylene is prepared by mixing polyethylene resin, silicon oil, crosslinking agent and croslinking coagent, and by crosslinking the polyethylene and silicon by means of reaction extrusion method. The silicon-grafted polyethylene, other than the silicon oil, does not cause blooming phenomenon, is not sticky and has the advantage of reducing surface friction coefficient. Preferable content of the silicon-grafted polyethylene is 2 ~ 20 parts by weight, or more preferably, 5 ~ 10 parts by weight. When the content is below 2 parts by weight, it is difficult to improve scratch resistance, and when the content is over 20 parts by weight, there is a decrease in the flexural modulus of elasticity as well as the rise in the cost of production.

Below, the present invention will be described in more detail with reference to examples.

### Best Mode for Carrying out the Invention

### Preparation of polyolefin resin

The polyolefin resin is prepared in the form of pallet by dry blending 100 part by weight of polypropylene resin, 20 parts by weight of talc which is used as an inorganic filler and 5 parts by weight of silicon-grafted polyethylene(Luboten; OPTATECH Co.) and then by introducing to the twin screw extrusion device.

### Examples and comparative examples

The resin composition is prepared in the form of pallet by dry blending each materials as in Tables 1 and 2, and then by mixing them in molten state in the twin screw extrusion device, and sample is produced by using injection molding machine and evaluation is made by the following methods..

### Methods for testing physical properties

1. IZod impact test (notch part): ASTM D256
2. Flexural modulus of elasticity: ASTM D790
   Indication of evaluation result: ⓞ: Excellent, Δ: Good, ×: Bad
3. Fluidity: Fluidity is compared by measuring the value of spiral flow by using injection molding machine.
   (Test condition: Pressure 40 bars, injection time 25 seconds, cooling time 40 seconds and mold temperature 50°C)
4. Moldability: Sensory evaluation of moldability is carried out when sample is bleeded from the mold during the production of sample by using injection molding machine.
   Indication of evaluation result: ⓞ: Excellent, Δ: Good, ×: Bad
5. Evaluation of scratch resistance: The sample of each composition is tested with abrasion resistance tester flat bed type and the degree of scratch is examined with the naked eye.

Indication of evaluation result:
ⓞ: No whitening due to scratch at all,
○: Very little whitening due to scratch
Δ: Some whitening due to scratch but not severe
×: Severe whitening due to scratch

**Table 1**

| Item | Examples | | | | |
|---|---|---|---|---|---|
| | 1 | 2 | 3 | 4 | 5 |
| polypropylene resin | 100 | 100 | 100 | 100 | 100 |
| talc | 20 | 20 | 20 | 20 | 20 |
| silicon-grafted PE | 2 | 5 | 10 | 15 | 20 |
| IZod impact strength (kg.cm/cm) | 6 | 7 | 8 | 8 | 9 |
| Flexural modulus of elasticity(Mpa) | ⓞ | ⓞ | ⓞ | ⓞ | Δ |
| Fluidity(mm) | 132 | 134 | 135 | 138 | 142 |
| Moldability | Δ | ⓞ | ⓞ | ⓞ | ⓞ |
| Scratch resistance | ⓞ | ⓞ | ⓞ | ⓞ | ⓞ |

**Table 2**

| Item | Comparative Examples | | | | |
|---|---|---|---|---|---|
| | 1 | 2 | 3 | 4 | 5 |
| polypropylene resin | 100 | 100 | 100 | 100 | 100 |
| talc | 20 | 20 | 20 | 20 | 20 |
| silicon-grafted PE | | | | | |
| Ethylene-α-olefin | 3 | 5 | 10 | | |
| copolymer rubber | | | | | |
| Mica | | | | 10 | 20 |
| IZod impact strength (kg.cm/cm) | 8 | 9 | 12 | 7 | 5 |
| Flexural modulus of elasticity(Mpa) | ⓞ | Δ | × | ⓞ | ⓞ |
| Fluidity(mm) | 120 | 115 | 110 | 133 | 125 |
| Moldability | Δ | ⓞ | ⓞ | × | × |
| Scratch resistance | × | × | Δ | × | × |

The adhesiveness of polyethylene matrix resin and inorganic filler is improved by using silicon-grafted polyethylene, and by adding appropriate amount of inorganic filler, fluidity, moldability, scratch resistance and flexural modulus of elasticity is improved while maintaining impact resistance.

## Claims

1. A polyolefin resin composition, comprising 100 parts by weight of polypropylene, 5 to 45 parts by weight of inorganic filler, and 2 to 20 parts by weight of silicon-grafted polyethylene, wherein said silicon-grafted polyethylene is prepared by mixing polyethylene resin, silicon oil, crosslinking agent and crosslinking coagent, and by crosslinking the polyethylene and silicon by means of reaction extrusion method.

2. The polyolefin resin composition of claim 1, wherein said inorganic filler is one or more of materials which is selected from the group consisting of talc, calcium carbonate, glass fiber, mica and silica.

## Patentansprüche

1. Polyolefinharzzusammensetzung, umfassend 100 Teile pro Gewicht Polypropylen, 5 bis 45 Teile pro Gewicht eines anorganischen Füllstoffs und 2 bis 20 Teile pro Gewicht Silicon-gepfropftes Polyethylen, worin das Silicon-gepfropfte Polyethylen hergestellt ist durch Mischen von Polyethylenharz, Siliconöl, Kreuzvernetzungs-Reagenz und Kreuzvernetzungs-Co-Reagenz, und durch Kreuzvernetzen des Polyethylens und Silicons durch Reaktionsextrusionsverfahren.

2. Polyolefinharzzusammensetzung nach Anspruch 1, worin der anorganische Füllstoff eines oder mehrere Materialien ist, das gewählt ist aus der Gruppe, die besteht aus Talg, Calciumcarbonat, Glasfaser, Mica und Silica.

## Revendications

1. Composition de résine de polyoléfine, comprenant 100 parties en poids de polypropylène, de 5 à 45 parties en poids de charge organique, et de 2 à 20 parties en poids de polyéthylène greffé par une silicone, le polyéthylène greffé par une silicone étant préparé en mélangeant de la résine de polyéthylène, de l'huile de silicone, un agent de réticulation et un co-agent de réticulation, et en réticulant le polyéthylène et la silicone au moyen d'un procédé d'extrusion avec réaction.

2. Composition de résine de polyoléfine suivant la revendication 1, dans laquelle la charge organique est une ou plusieurs des substances qui est choisie dans le groupe consistant en le talc, le carbonate de calcium, la fibre de verre, le mica et la silice.
